# EUROPEAN PATENT SPECIFICATION

(11) **EP 3 491 350 B1**
(45) Date of publication and mention of the grant of the patent: **23.03.2022**
(21) Application number: 17754273.5
(22) Date of filing: 26.07.2017
(51) Int. Cl.: G01G 21/30, G01G 21/28

(54) **WEIGHING UNIT**
WIEGEEINHEIT
UNITÉ DE PESAGE

(30) Priority: 27.07.2016 IT 201600078606
(43) Date of publication of application: 05.06.2019
(73) Proprietor: I.M.A. Industria Macchine Automatiche S.p.A., 40064 Ozzano dell'Emilia - Bologna (IT)
(72) Inventor: GABUSI, Gabriele, 40064 Ozzano dell'Emilia (BO) (IT); TREBBI, Claudio, 40064 Ozzano dell'Emilia (BO) (IT)
(74) Representative: Paglia, Pietro
(86) International application number: PCT/EP2017/068857
(87) International publication number: WO 2018/019873

(56) References cited:
- EP-A1- 2 356 411
- US-A1- 2008 121 049

## Description

The present invention relates to a weighing unit for the pharmaceutical and chemical sectors.

In the pharmaceutical industry and in the chemical industry, there is a need to introduce predefined quantities of substances (drugs, active ingredients, excipients, supplements, biocides and the like) into specific containers such as vials, bottles, syringes, carpules and the like.

These containers undergo prior washing and sterilization treatments to ensure that there is no residue inside them (not even dust particles and the like) and to remove any contaminants from their surfaces.

According to a possible application, illustrated by way of a not limiting example of the scope of the present invention, the containers could be collected in a nest, the latter also undergoing similar washing and sterilization treatments.

Again referring to the above example (which represents one of the many fields of application of the present invention), for the filling of containers, it is thus envisaged that they are removed from the nest and transferred to a dispenser that introduces the required amount of substance within each container.

The accuracy of the dispensers used in the industrial sectors of interest is excellent, but it is always preferable (when not mandatory) to verify the correctness of the weight of the substance introduced into the container, as an incorrect dosage could result in serious consequences (in the case of medicinal products, an incorrect dosage could poison the patient).

Only by submitting each container (after it is filled) to individual weighing operations is it possible to verify that its contents are perfectly compliant with the dosages required.

Weighing operations are carried out immediately after the container is filled, therefore in an environment with a high contamination class (environments in which particles and contaminants suspended in air have been reduced through air purification/filtration processes).

Weighing is normally carried out by using load cells: each cell consists of a hollow case within which the entire electronics is housed and which is provided with a weighing seat on which the container to be weighed is placed, as e.g. described in document EP2356411.

The weighing seat comprises suitable transducers that convert the mechanical load acting on the seat into an electrical signal proportional thereto, this signal is then appropriately processed by the electronics in order to be able to compare it with preset standards.

Between the hollow case and the electronics, there are empty spaces in which only air is present; the weighing seat must also be connected to the internal electronics.

Since the load cells cannot undergo sterilization, the air (not sterilized) present inside the hollow case can come into contact with the substance introduced into the container to be weighed: any contaminants suspended in air could thus come into contact with the substance with serious consequences.

The main aim of the present invention is to solve the problems outlined above, by proposing a weighing unit for the pharmaceutical and chemical sectors that prevents any contamination of the substance present in the container to be weighed. With regard to this aim, an object of the invention is to propose a weighing unit for the pharmaceutical and chemical sectors which guarantees measurement accuracy that is at least analogous to that of well-known weighing units.

Another object of the invention is to propose a weighing unit for the pharmaceutical and chemical sectors which ensures that the contamination class number of the environment in which it is installed is maintained, even though the unit does not undergo sterilization.

It is a further object of the present invention to provide a weighing unit for the pharmaceutical and chemical sectors at a substantially low cost with a relatively simple, practical construction and safe application.

This aim and these objects are achieved by a weighing unit for the pharmaceutical and chemical sectors according to Claim 1 of the present invention.

Further features and advantages of the invention will become more apparent from the description of a preferred but non-exclusive embodiment of the weighing unit according to the invention, illustrated by way of a nonlimiting example, in the accompanying drawings, in which:

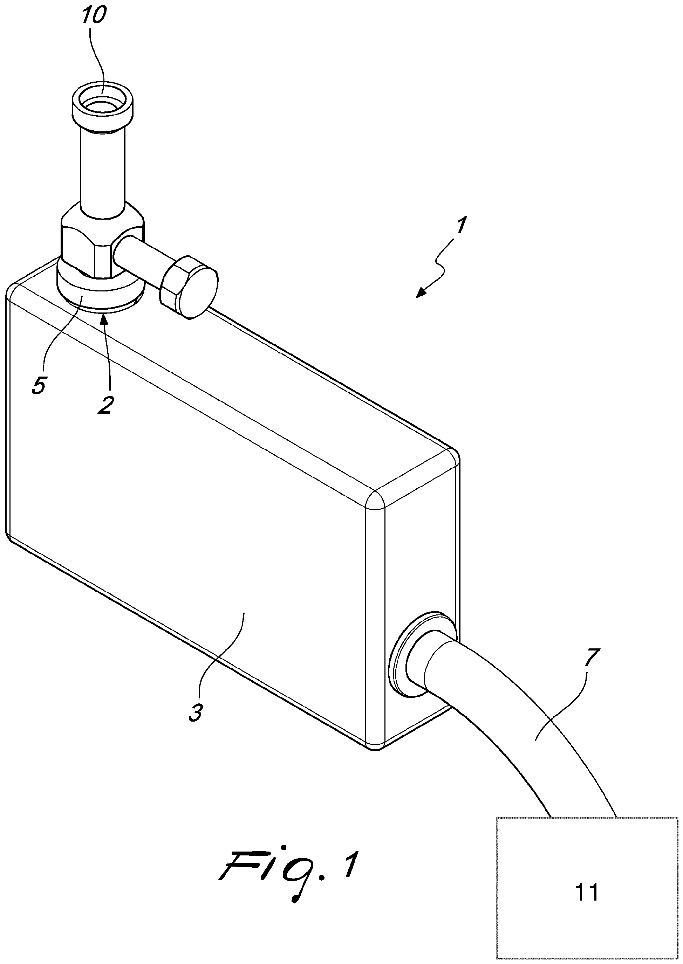

- Figure 1 shows, in a schematic axonometric view, a weighing unit according to the invention;

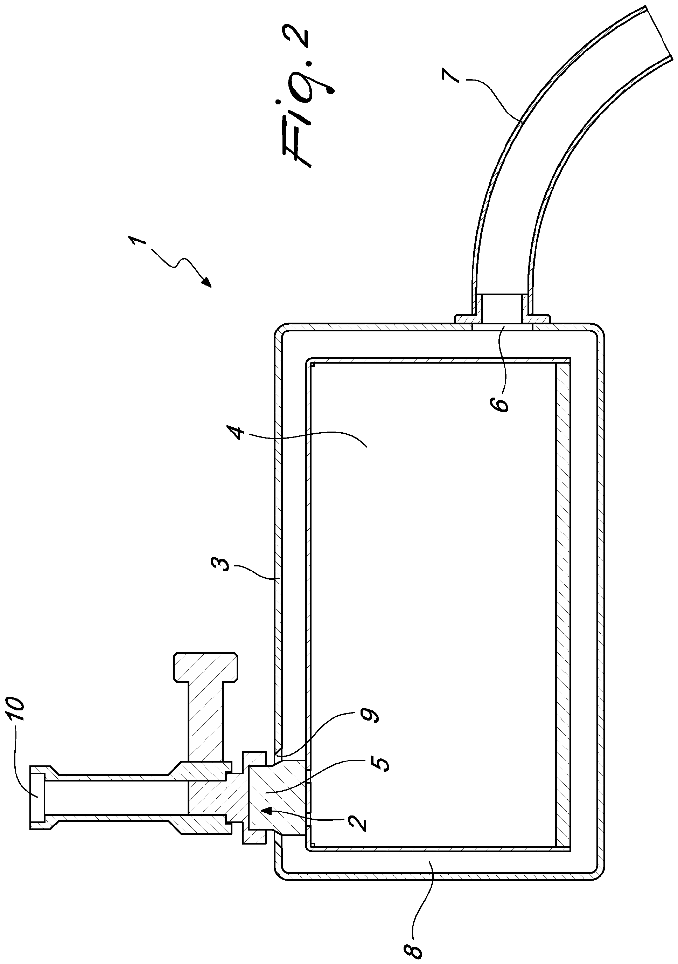

- Figure 2 shows, in a schematic side view sectioned according to a longitudinal vertical plane, the weighing unit depicted in Figure 1;

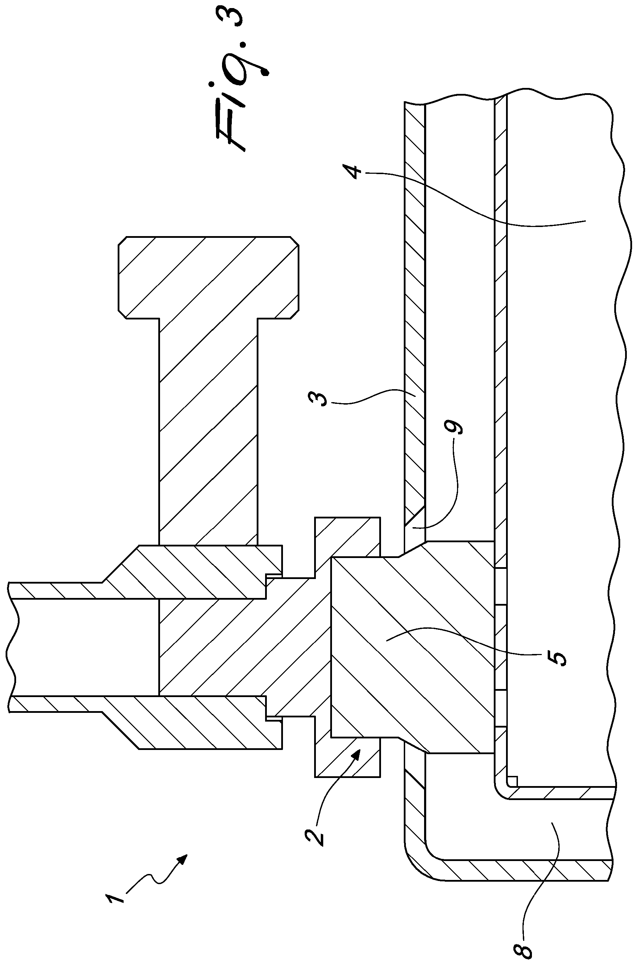

- Figure 3 is an enlarged detail of Figure 2.

With particular reference to the aforementioned figures, it is generally indicated with 1 a weighing unit particularly suitable for use in the pharmaceutical and chemical sectors as well as industrial sectors in which the protocol envisaged to avoid contamination of handled substances (those which fill the containers) is especially stringent.

The unit 1 comprises a hollow case 3, at least one load cell 2 for weighing a container, the load cell 2 is placed at least partially inside the hollow case 3. The unit 1 also comprises a signal processing unit 4 placed within the hollow case 3 and a transducer 5 associated with the load cell 2 and controlled by the signal processing unit 4. Moreover, the transducer faces the outside of the hollow case 3.

In accordance with the present invention, the hollow case 3 has a through hole 6 connected to a suction duct 7, which in turn is connected to a vacuum pump 11 responsible for keeping the pressure inside the hollow case 3 lower with respect to the surrounding environment in which the hollow case 3 is housed. In this way, the continuous suction of air via the through hole 6 prevents the leakage of air with suspended particles from the inside of said hollow case 3 to the surrounding environment.

Between the hollow case 3 and the signal processing unit 4 there is an interstice 8 present in which air is located: the need to keep the transducer 5 separate from the hollow case 3 (the transducer 5 is firmly attached to the signal processing unit 4, while the transducer 5 is connected to the outside of the hollow case 3 through a passageway 9 larger than the transducer 5 itself) implies the possibility of leakage into the surrounding environment of the air present within the interstice 8.

The separation of the transducer 5 from the hollow case 3, obtained thanks to the passageway 9 which forms the interstice 8, is necessary to prevent any contact, even indirect, between the transducer 5 and the hollow case 3 that may affect (making it inaccurate) the weighing operation.

The presence of continuous suction (through the hole 6 and the suction duct 7) by means of the pump 11 enables maintaining constant vacuum conditions within the hollow case 3 and thus prevents the leakage of air through the passageway 9 (by means of which the air, in principle, can only enter the hollow case 3).

This ensures that the presence of any contaminants and/or particles in the interstice 8 can never come into contact with the surrounding environment (where the chemical and/or pharmaceutical substance with which the containers are filled is located).

With particular reference to the pharmaceutical industry, it is specified that the environment in which the unit 1 will operate according to the invention is an environment with a high contamination class, such as Class A, Class B and the like.

In particular, the unit 1 according to the present invention, is located in a closed chamber kept under controlled contamination conditions, preferably the chamber is kept sterile.

In other words, this is an environment in which, by means of specific air purification and air filtration treatments, the number of suspended particles in air (and thus the number of potential contaminants present within the same) is minimized according to the standards established by current regulations.

With particular reference to an embodiment of definite practical interest and with a wide range of applications, the unit 1 according to the invention can validly comprise a plurality of load cells 2, mutually adjacent, for the simultaneous weighing of a plurality of containers that have been previously filled.

The number of load cells 2 can equal the number of dispensing nozzles by which the simultaneous filling of multiple containers is carried out: in this way it would be possible to submit to the filling and weighing cycle the same number of containers just filled, maximizing efficiency.

In the case where there is a series of load cells 2 mutually adjacent, each load cell 2 can conveniently comprise a hollow case 3 provided with a hole 6 coupled to a respective suction duct 7.

The suction ducts 7 of the various cells 2 will be connected to a common manifold fitted to the vacuum pump 11.

However, the possibility is not excluded of producing a hollow case 3 capable of holding a plurality of load cells 2 (and thus provided with respective passageways 9 for each transducer 5 of each cell 2): through one hole 6 (even if it is not excluded in this case to incorporate a greater number of holes 6 distributed along the hollow case 3 in order to make the suction effects uniform) connected to the duct 7, maintaining vacuum conditions inside the hollow case 3 (thus, in the interstice 8) will be ensured.

It seems useful to emphasize that the environment surrounding the hollow case 3 can effectively be kept at an operating pressure higher than the atmospheric pressure (precisely to prevent the entrance into such environment of particles and contaminants from the outside): in this case the pressure inside the hollow case 3 (and particularly in the interstice 8) will advantageously be kept at a lower pressure due to the action of the suction duct 7, than that of the operating pressure present in the environment.

According to a possible embodiment of definite interest and with a wide range of applications, the transducer 5 may have a seat 10 for at least one respective container.

During the weighing step, a portion of the container must be housed in the seat 10 so that the weight of the entire container and its possible contents only rests on the transducer 5.

According to an alternative embodiment to the one just described, but equally interesting from a practical perspective, the transducer 5 can advantageously have a coupling device for at least a portion of a container. In such case, the container, in its weighing configuration, will be attached to the transducer's coupling device.

Advantageously, the present invention solves the problems outlined above by identifying a weighing unit 1, particularly suitable for the pharmaceutical and chemical sectors, which prevents any contamination of the substance present in the container to be weighed. In fact, it is not possible for particles and/or contaminants to escape from the hollow case 3 to the outside (thanks to the vacuum created in the interstice 8 ensured by the suction duct 7) and thus the presence of the weighing unit 1 does not affect or compromise in any way the sterility of the environment in which it is installed.

Effectively, the weighing unit 1 guarantees measurement accuracy that is at least analogous to that of well-known weighing units: in fact, it uses load cells 2 of a well-known type in which the only objective is to maintain constant vacuum conditions in the interstice 8 with respect to the outside environment.

Favorably, the weighing unit 2 maintains the contamination class number of the environment in which it is installed, even though the unit 1 itself does not undergo sterilization.

Beneficially, the weighing unit 1 according to the invention is relatively simple and practical to implement, and also entails contained costs: these features make the unit 1 an innovative and safe application.

The invention, thus conceived, is susceptible to numerous modifications and variations all falling within the scope of the inventive concept, as long as they fall under the scope defined in the appended claims; moreover, all of the details may be replaced by other technically equivalent elements.

In the sample embodiments illustrated, individual features, described in relation to specific examples, are in fact interchangeable with other different features, existing in other embodiments.

In practice, the materials used, as well as their sizes, may be of any kind according to the requirements and the state of the art.

## Claims

1. Weighing unit for the pharmaceutical and chemical sectors comprising a hollow case (3), at least one load cell (2) for weighing a container and at least partially placed inside said hollow case (3), a signal processing unit (4) placed within the hollow case (3) and a transducer (5) associated with the load cell (2) and facing the outside of said hollow case (3) to allow the weighing of a container placed outside said hollow case (3), said transducer (5) being controlled by said signal processing unit (4), **characterized in that** said hollow case (3) comprises a through hole (6) connected to a suction duct (7), said suction duct (7) being connected to a vacuum pump (11) configured for keeping the pressure inside the hollow case (3) lower than the pressure outside the hollow case (3) where the container to be weighed is present, the continuous suction of air via said through hole (6) preventing the leakage of air with suspended particles from the inside of said hollow case (3) to the outside.

2. Weighing unit according to Claim 1, wherein said hollow case (3) is located within a closed chamber under controlled contamination conditions.

3. Weighing unit according to Claim 2, wherein said chamber is kept at an operating pressure higher than the atmospheric pressure, the pressure inside said hollow case (3) being kept at a lower value than said operating pressure by means of said vacuum pump (11).

4. Weighing unit according to any one of the preceding claims comprising a plurality of load cells (2) mutually adjacent, for the simultaneous weighing of a plurality of containers.

5. Weighing unit according to Claim 4, wherein each load cell (2) comprises a respective hollow case (3) provided with a hole (6) coupled to a respective suction duct (7), said suction ducts (7) being connected to a common manifold fitted to the vacuum pump (11).

6. Weighing unit according to any one of the preceding claims wherein said transducer (5) has a seat (10) configured to accommodate the container to be weighed.

7. Weighing unit according to any one of the preceding claims, wherein said transducer (5) protrudes outside the hollow case (3) through a passageway (9) wider than the transducer (5) itself leaving a free space between the transducer (5) and the wall of the hollow case (3).

8. Weighing unit according to claim 7, wherein between the hollow case (3) and the signal processing unit (4) there is an interstice (8) communicating with the suction duct (7), said passageway (9) communicating with said interstice (8).

## Patentansprüche

1. Wiegeeinheit für die pharmazeutischen und chemischen Sektoren, aufweisend ein hohles Gehäuse (3), mindestens eine Ladezelle (2) zum Wiegen eines Behälters, die zumindest teilweise im Inneren des hohlen Gehäuses (3) angeordnet ist, eine Signalverarbeitungseinheit (4), die im Inneren des hohlen Gehäuses (3) angeordnet ist, und einen Wandler (5) aufweist, der mit der Ladezelle (2) verbunden ist und der Außenseite des hohlen Gehäuses (3) zugewandt ist, um das Wiegen eines Behälters zu ermöglichen, der außerhalb des hohlen Gehäuses (3) angeordnet ist, wobei der Wandler (5) von der Signalverarbeitungseinheit (4) gesteuert wird, **dadurch gekennzeichnet, dass** das hohle Gehäuse (3) eine Durchgangsöffnung (6) aufweist, das mit einer Saugleitung (7) verbunden ist, wobei die Saugleitung (7) mit einer Vakuumpumpe (11) verbunden ist, die dazu eingerichtet ist, den Druck im Inneren des hohlen Gehäuses (3) niedriger zu halten als den Druck außerhalb des hohlen Gehäuses (3), wo sich der zu wiegende Behälter befindet, wobei das kontinuierliche Ansaugen von Luft durch die Durchgangsöffnung (6) das Austreten von Luft mit suspendierten Partikeln aus dem Inneren des hohlen Gehäuses (3) nach außen verhindert.

2. Wiegeeinheit nach Anspruch 1, wobei sich das hohle Gehäuse (3) in einer geschlossenen Kammer unter kontrollierten Kontaminationsbedingungen befindet.

3. Wiegeeinheit nach Anspruch 2, wobei der Betriebsdruck in der Kammer höher als der Atmosphärendruck gehalten wird und der Druck im Inneren des hohlen Gehäuses (3) mittels der Vakuumpumpe (11) auf einem Wert gehalten wird, der niedriger als jener des Betriebsdrucks ist.

4. Wiegeeinheit nach einem der vorhergehenden Ansprüche, die eine Vielzahl von aneinander angrenzenden Ladezellen (2) für das gleichzeitige Wiegen einer Vielzahl von Behältern aufweist.

5. Wiegeeinheit nach Anspruch 4, wobei jede Ladezelle (2) ein entsprechendes hohles Gehäuse (3) aufweist, das mit einer Öffnung (6) versehen ist, die mit einer entsprechenden Saugleitung (7) verbunden ist, wobei die Saugleitungen (7) mit einem gemeinsamen Verteiler verbunden sind, der an die Vakuumpumpe (11) angeschlossen ist.

6. Wiegeeinheit nach einem der vorhergehenden Ansprüche, wobei der Wandler (5) einen Sitz (10) aufweist, der dazu eingerichtet ist, den zu wiegenden Behälter aufzunehmen.

7. Wiegeeinheit nach einem der vorhergehenden Ansprüche, wobei der Wandler (5) durch einen Durchgang (9), der breiter als der Wandler (5) selbst ist, aus dem hohlen Gehäuse (3) heraustritt und einen freien Raum zwischen dem Wandler (5) und der Wand des hohlen Gehäuses (3) lässt.

8. Wiegeeinheit nach Anspruch 7, wobei zwischen dem hohlen Gehäuse (3) und der Signalverarbeitungseinheit (4) ein Zwischenraum (8) vorhanden ist, der mit der Saugleitung (7) in Verbindung steht, wobei der Durchgang (9) mit dem Zwischenraum (8) in Verbindung steht.

## Revendications

1. Unité de pesée pour les domaines pharmaceutiques et chimiques comprenant un boîtier creux (3), au moins une cellule de charge (2) destinée à peser un contenant et placée au moins partiellement à l'intérieur dudit boîtier creux (3), une unité de traitement de signal (4) placée au sein du boîtier creux (3) et un transducteur (5) associé à la cellule de charge (2) et tourné vers l'extérieur dudit boîtier creux (3) pour permettre la pesée d'un contenant placé à l'extérieur dudit boîtier creux (3), ledit transducteur (5) étant commandé par ladite unité de traitement de signal (4), **caractérisée en ce que** ledit boîtier creux (3) comprend un trou de passage (6) raccordé à un conduit d'aspiration (7), ledit conduit d'aspiration (7) étant raccordé à une pompe à vide (11) configurée pour maintenir la pression à l'intérieur du boîtier creux (3) à une valeur plus basse que la pression à l'extérieur du boîtier creux (3) où le contenant à peser est présent, l'aspiration continue de l'air via ledit trou de passage (6) empêchant la fuite d'air avec des particules en suspension depuis l'intérieur dudit boîtier creux (3) vers l'extérieur.

2. Unité de pesée selon la revendication 1, dans laquelle ledit boîtier creux (3) est situé au sein d'une chambre fermée dans des conditions de contamination contrôlées.

3. Unité de pesée selon la revendication 2, dans laquelle ladite chambre est maintenue à une pression de service plus élevée que la pression atmosphérique, la pression à l'intérieur dudit boîtier creux (3) étant maintenue à une valeur plus basse que ladite pression de service au moyen de ladite pompe à vide (11).

4. Unité de pesée selon l'une quelconque des revendications précédentes, comprenant une pluralité de cellules de charge (2) mutuellement adjacentes, pour la pesée simultanée d'une pluralité de contenants.

5. Unité de pesée selon la revendication 4, dans laquelle chaque cellule de charge (2) comprend un boîtier creux (3) respectif pourvu d'un trou (6) couplé à un conduit d'aspiration (7) respectif, lesdits conduits d'aspiration (7) étant raccordés à un collecteur commun branché sur la pompe à vide (11).

6. Unité de pesée selon l'une quelconque des revendications précédentes, dans laquelle ledit transducteur (5) comporte une assise (10) configurée pour accueillir le contenant à peser.

7. Unité de pesée selon l'une quelconque des revendications précédentes, dans laquelle ledit transducteur (5) dépasse à l'extérieur du boîtier creux (3) à travers un passage (9) plus large que le transducteur (5) laissant lui-même un espace libre entre le transducteur (5) et la paroi du boîtier creux (3).

8. Unité de pesée selon la revendication 7, dans laquelle, entre le boîtier creux (3) et l'unité de traitement de signal (4) se trouve un interstice (8) communiquant avec le conduit d'aspiration (7), ledit passage (9) communiquant avec ledit interstice (8).
